Europäisches Patentamt

European Patent Office

Office européen des brevets

(11) Veröffentlichungsnummer : **0 470 475 B1**

(12) **EUROPÄISCHE PATENTSCHRIFT**

(45) Veröffentlichungstag der Patentschrift :
**01.06.94 Patentblatt 94/22**

(51) Int. Cl.$^5$ : **H01F 1/053**

(21) Anmeldenummer : **91112715.7**

(22) Anmeldetag : **29.07.91**

(54) **Verfahren zur Herstellung eines Formkörpers aus einem anisotropen Magnetwerkstoff auf Basis des Stoffsystems Sm-Fe-N.**

(30) Priorität : **09.08.90 DE 4025278**

(43) Veröffentlichungstag der Anmeldung :
**12.02.92 Patentblatt 92/07**

(45) Bekanntmachung des Hinweises auf die
Patenterteilung :
**01.06.94 Patentblatt 94/22**

(84) Benannte Vertragsstaaten :
**DE FR GB NL**

(56) Entgegenhaltungen :
**IEEE TRANSACTIONS ON MAGNETICS. Bd.
23, Nr. 5, September 1987, NEW YORK US
Seiten 3098 - 3100; S.HIGANO ET AL: 'MAGNE-
TIC PROPERTIES OF RE-TM-N SYSTEM'**

(56) Entgegenhaltungen :
**PROCEEDINGS OF THE NATO ADVANCED
STUDY INSTITUTE ON THE SCIENCE & TECH-
NOLOGY OF NANOSTRUCTURED MAGNETIC
MATERIALS 24. Juni 1990, KRETA GR Seiten
439 - 458; J.M.D.COEY: 'INTERMETALLIC
COMPOUNDS AND CRYSTAL FIELD INTER-
ACTIONS'
PATENT ABSTRACTS OF JAPAN vol. 9, no.
287 (C-314)(2010) 14. November 1985**

(73) Patentinhaber : **SIEMENS
AKTIENGESELLSCHAFT
Wittelsbacherplatz 2
D-80333 München (DE)**

(72) Erfinder : **Schultz, Ludwig, Dr.
Amselweg 22
W-8526 Bubenreuth (DE)**
Erfinder : **Schnitzke, Kurt, Dipl.-Ing. FH
Geissbergweg 3
W-8524 Neunkirchen/Brand (DE)**
Erfinder : **Wecker, Joachim, Dr.
Georg-Krauss-Strasse 2
W-8520 Erlangen (DE)**
Erfinder : **Katter, Matthias, Dipl.-Ing.
Obleiweg 6
W-8520 Dechsendorf (DE)**

## Beschreibung

Die Erfindung bezieht sich auf Verfahren zur Herstellung eines Formkörpers aus einem anisotropen Magnetwerkstoff auf Basis des Stoffsystems Sm-Fe-N, das eine kristalline, hartmagnetische Phase mit $Th_2Zn_{17}$-Kristallstruktur aufweist, in deren Kristallgitter N-Atome eingebaut sind, bei welchem Verfahren ein Zwischenprodukt des herzustellenden Magnetwerkstoffs mit einer zweikomponentigen Sm-Fe-Phase mit einer dem Aufbau der Kristallstruktur zumindest weitgehend entsprechenden Zusammensetzung in einer stickstoffhaltigen Atmosphäre wärmebehandelt und zu dem Formkörper verarbeitet wird.

Seit einigen Jahren sind Magnetwerkstoffe auf Basis von Stoffsystemen bekannt, die ein Seltenes Erdmetall und ein Übergangsmetall enthalten und sich durch hohe Koerzitivfeldstärken $H_{ci}$ und hohe Energieprodukte $(B*H)_{max}$ auszeichnen. Hauptvertreter sind als binäres Stoffsystem Co-Sm und als ternäres Stoffsystem Nd-Fe-B. Ihre hartmagnetischen Eigenschaften beruhen auf intermetallischen Verbindungen mit einer hohen magnetischen Anisotropie und einer hohen Gefügeausbildung in den jeweiligen Werkstoffen. Die Herstellung dieser Magnetwerkstoffe kann z.B. durch Sintern von Pulvern der Komponenten des entsprechenden Stoffsystems erfolgen (vgl. z.B. EP-A-0 134 304). Darüber hinaus ist es auch möglich, entsprechende Magnetwerkstoffe mittels einer sogenannten Rascherstarrungstechnik herzustellen (vgl. z.B. EP-A-0 284 832).

Bei den entsprechenden ternären Magnetwerkstoffen wird auch das Stoffsystem Sm-Fe-Ti diskutiert (vgl. "J.Appl.Phys.", Vol. 64, No. 10, 1988, Seiten 5720 bis 5722). Seit kurzem ist auch die Existenz von $Sm_2Fe_{17}N_x$ als Magnetwerkstoff bekannt. Dieses Material besitzt die bekannte $Th_2Zn_{17}$-Kristallstruktur, wobei seine intrinsischen Eigenschaften deutlich besser sind als die von $Nd_2Fe_{14}B$. So liegen z.B. das Anisotropiefeld bei Raumtemperatur bei etwa 20 T, die Curietemperatur bei etwa 470 °C und die Sättigungsmagnetisierung bei etwa 1,54 T. Zur Herstellung von $Sm_2Fe_{17}N_x$ ist es bekannt, $Sm_2Fe_{17}$ als Ausgangsmaterial zu erschmelzen. Das so erhaltene Zwischenprodukt wird dann in einer $N_2$- oder $NH_3$-Atmosphäre erhitzt, wobei sich die gewünschte hartmagnetische Phase durch Einbau von bis zu 2,7 N-Atomen pro Formeleinheit in die Gitterstruktur des Vorproduktes bildet. Mit der Nitrierung des $Sm_2Fe_{17}$-Zwischenproduktes läßt sich außerdem eine uniaxiale magnetische Anisotropie der hartmagnetischen Phase erreichen (vgl. Vortrag von J.M.D.Coey während Tagung des "Nato Advanced Study Institute on the Science and Technology of Nanostructured Magnetic Materials", 25.6. bis 7.7.1990, Heraklion, Kreta, GR).

Aufgabe der vorliegenden Erfindung ist es, dieses bekannte Verfahren zur Herstellung eines hartmagnetischen Werkstoffes auf Basis des Stoffsystems Sm-Fe-N dahingehend auszugestalten, daß auf verhältnismäßig einfache Weise die Ausbildung der gewünschten hartmagnetischen Phase zu gewährleisten und dabei ein Material mit hoher Koezitivfeldstärke $H_{ci}$ von insbesondere über 5 kA/cm zu erhalten ist, das die Herstellung von anisotropen kompakten Sm-Fe-N-Formkörpers wie z.B. von Dauermagneten ermöglicht.

Diese Aufgabe wird für ein Verfahren mit den eingangs genannten Merkmalen erfindungsgemäß dadurch gelöst, daß zunächst ein pulverförmiges Vorprodukt zu einem Preßling mit magnetisch isotropem Gefüge der Sm-Fe-Phase bei erhöhter Temperatur kompaktiert wird, daß dann der Preßling mittels eines gerichteten Heißverformungsschrittes in das Zwischenprodukt mit magnetisch anisotropem Gefüge der Sm-Fe-Phase überführt wird und daß schließlich in dem Zwischenprodukt in der stickstoffhaltigen Atmosphäre mittels der Wärmebehandlung die hartmagnetische Phase des Stoffsystems Sm-Fe-N eingestellt wird.

Die Erfindung geht dabei von der bekannten Tatsache aus, daß sich mit dem Einbau von N-Atomen innerhalb der bekannten $Th_2Zn_{17}$-Kristallstruktur ohne Änderung des Gittertyps ein Material gewinnen läßt, das hartmagnetische Eigenschaften besitzt. Um einen anisotropen kompakten Formkörper aus diesem Material zu erhalten, soll gemäß der Erfindung aus einem pulverförmigen Vorprodukt, das isotrop die binäre $Sm_2Fe_{17}$-Phase enthält, ein kompaktes Zwischenprodukt hergestellt werden. Hierzu wird zunächst aus dem Pulver des Vorproduktes ein Preßling gebildet, der noch magnetisch isotrop ist. Um in diesem Preßling eine magnetische Anisotropie zu erzeugen, wird dieser einem entsprechenden Heißverformungsschritt unterzogen, wobei die Verformungskräfte im wesentlichen nur in einer Richtung wirken und sich die magnetische Anisotropie mit der leichten Richtung der Magnetisierung parallel zur Kraftrichtung einstellt. Derartige gerichtete Heißverformungsschritte sind unter der Bezeichnung "Die-Upsetting" allgemein bekannt (vgl. "Appl. Phys. Lett.", Vol. 46, No. 8, 1985, Seiten 790 und 791, Vol. 53, No. 4, 1988, Seiten 342 und 343 oder "IEEE Trans. Magn.", Vol. MAG-21, No. 5, 1985, Seiten 1958 bis 1963). Auch zur Ausbildung der hartmagnetischen Phase des Stoffsystems Nd-Fe-B wurde ein entsprechender Heißverformungsschritt bereits angewandt (vgl. DE-OS 38 32 472). Erfindungsgemäß soll dieser bekannte Verfahrensschritt aber nicht zur Ausbildung eines anisotropen, hartmagnetischen Endproduktes, sondern zu einem anisotropen Zwischenprodukt mit einer weichmagnetischen Sm-Fe-Phase dienen. Mit der hierfür vorgesehenen Verformung kann bereits die gewünschte Gestalt des herzustellenden Formkörpers eingestellt werden. Bei der anschließenden Nitrierung des Zwischenkörpers, die umso rascher abläuft, je poröser der Zwischenkörper ist, wird in bekannter Weise die gewünschte hartmagnetische Phase des Stoffsystems Sm-Fe-N erzeugt, wobei die magnetische Anisotropie erhalten bleibt. Das erfindungsgemäße Verfahren gestattet also eine verhältnismäßig einfache und jederzeit reproduzierbare Herstellung von beliebig geformten Körpern aus einem Dauermagnetwerkstoff des dreikomponentigen Stoffsystems Sm-Fe-N.

Vorteilhafte Ausgestaltungen des erfindungsgemäßen Verfahrens gehen aus den Unteransprüchen hervor.

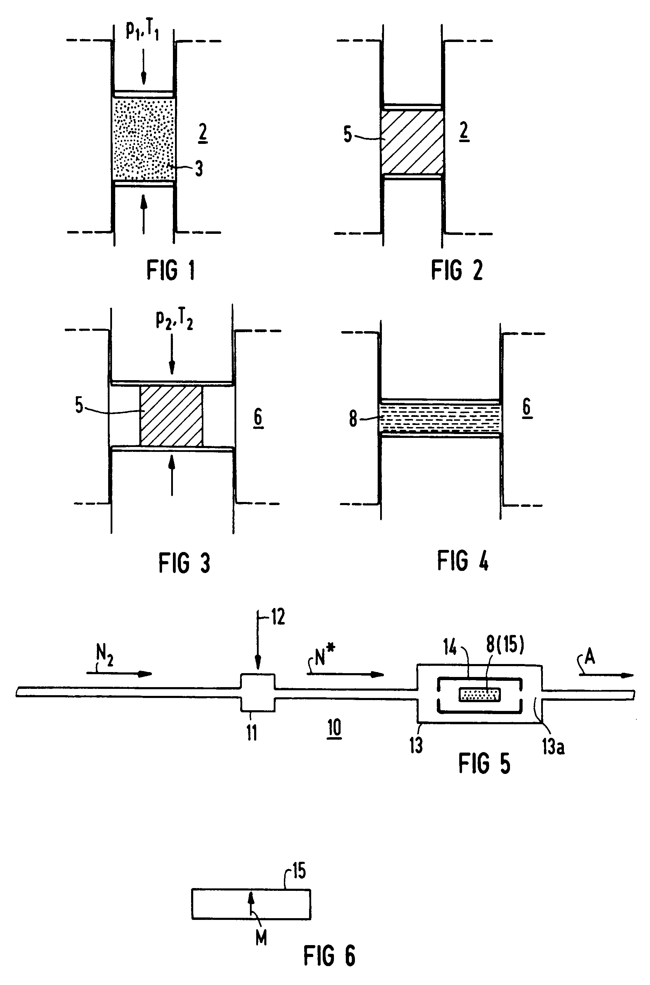

Das erfindungsgemäße Verfahren wird nachfolgend anhand von Ausführungsbeispielen noch weiter erläutert, wobei auf die Zeichnung Bezug genommen wird. In deren Figuren 1 bis 6 ist jeweils als Schnitt ein Verfahrensschritt veranschaulicht.

Um zu einem kompakten, hartmagnetischen Formkörper des Stoffsystems Sm-Fe-N zu gelangen, soll zunächst ein pulverförmiges Vorprodukt mit einer $Sm_2Fe_{17}$-Phase hergestellt werden. Unter einem Material mit der $Sm_2Fe_{17}$-Phase wird bei dem erfindungsgemäßen Verfahren allgemein jeder Werkstoff mit einer Phase des binären Systems Sm-Fe verstanden, der die $Th_2Zn_{17}$-Kristallstruktur besitzt. Die Anteile der einzelnen Komponenten dieses Werkstoffes brauchen dabei nicht exakt der Zusammensetzung $Sm_2Fe_{17}$ zu entsprechen. Zur Herstellung des Vorproduktes wird von Pulvern aus oder mit den beteiligten Komponenten ausgegangen, die hinreichend rein sind (z.B. jeweils mit mindestens 99,5 % Reinheit). Entweder werden elementare Pulver verwendet; oder es können auch die beteiligten Elemente in Form von Legierungen und/oder Verbindungen vorliegen. Die pulverförmigen Ausgangskomponenten des Vorproduktes werden dann zu einer Vorlegierung verarbeitet. Die Anteile der einzelnen Komponenten werden dabei so gewählt, daß die Vorlegierung die Zusammensetzung $Sm_xFe_{100-x}$ aufweist, wobei x zwischen 10 und 20 (jeweils in Atom-%) liegt. Die Vorlegierung kann in an sich bekannter Weise besonders vorteilhaft durch mechanisches Legieren in einer hierfür geeigneten Mahlvorrichtung gewonnen werden (vgl. z.B. "Metallurgical Transactions", Vol. 5, Aug. 1974, Seiten 1929 bis 1934, oder die EP-B-0 243 641). Ebensogut ist hierfür auch eine bekannte Rascherstarrungstechnik, insbesondere das sogenannte "melt spinning" (Schmelzspinnverfahren), geeignet (vgl. z.B. "Zeitschrift für Metallkunde", Bd. 69, H. 4, 1978, Seiten 212 bis 220 oder die DE-PS 37 16 005). Die erstellte Vorlegierung, die schließlich beispielsweise die Zusammensetzung $Sm_{2,2}Fe_{17}$ hat, kann nun noch in eine geeignete Mahlvorrichtung gegeben und auf durchschnittliche Korngrößen zwischen 0,2 μm und 50 μm, vorzugsweise zwischen 1 μm und 10 μm gemahlen werden. Das Pulver ist hier noch isotrop, da es nano- oder mikrokristallin ist.

Anschließend wird dieses Pulver des Vorproduktes gemäß Figur 1 in eine Heißpreßvorrichtung 2 gegeben. Mit dieser Presse wird das mit 3 bezeichnete pulverförmige Vorprodukt bei einem Preßdruck $p_1$ pro Flächeneinheit zwischen etwa 0,2 kbar und 5 kbar, beispielsweise bei etwa 1 kbar bei erhöhter Temperatur $T_1$ kompaktiert. Die Preßtemperatur $T_1$ für dieses Heißpressen wird im allgemeinen zwischen 500 °C und 1000 °C gewählt. Am Ende dieses Verfahrensschrittes liegt dann der in Figur 2 angedeutete Preßling 5 vor, der etwa 80 % bis 100 %, vorzugsweise 90 % bis 95 %, der maximalen Dichte hat. In ihm ist die weichmagnetische $Sm_2Fe_{17}$-Phase isotrop vorhanden.

Um einen Körper mit magnetisch anisotropem Gefüge dieser Phase zu erhalten, wird anschließend der Preßling 5 gemäß Figur 3 bei einer Temperatur $T_2$ einem gerichteten Heißverformungsschritt unterzogen. Die hierbei wirkenden Ausrichtungsmechanismen sind ähnlich denen bei dem sogenannten "Die-Upsetting". Hierzu wird der kompakte Preßling 5 in einer Verformungseinrichtung 6 ohne wesentliche Volumenänderung auf die Form des herzustellenden Formkörpers verformt, wobei auf den Preßling ein Druck $p_2$ in einer Vorzugsrichtung einwirkt. Der Verformungsdruck $p_2$ liegt im allgemeinen in der Größenordnung des Drucks $p_1$ zum Kompaktieren des pulverförmiggen Vorproduktes. Während des Verformungsschrittes wird die Verformungstemperatur $T_2$ zwischen 600 °C und 1000 °C gehalten.

Das so zu erhaltende, verformte Zwischenprodukt ist in Figur 4 angedeutet und mit 8 bezeichnet. Es weist nunmehr ein anisotropes Gefüge der binären, weichmagnetischen Sm-Fe-Phase mit $Th_2Zn_{17}$-Kristallstruktur sowie eine Gestalt auf, die der herzustellende Formkörper haben soll. In einem weiteren Schritt wird anschließend dieses Zwischenprodukt 8 in einer Stickstoff-Atmosphäre geglüht, um die gewünschte hartmagnetische $Sm_2Fe_{17}N_x$- Phase einzustellen. Hierzu wurde festgestellt, daß diese Verbindung für Stickstoffkonzentrationen x existiert, für die $0 < x \leqq 3$ ist (x in N-Atomen pro Einheitszelle). Da oberhalb von etwa 600 °C diese Phase instabil ist, muß die zu wählende Glühtemperatur unterhalb dieser Temperatur und zweckmäßigerweise oberhalb von 300 °C liegen.

Eine Nitrierung kompakter Körper bei den zugelassenen Glühtemperaturen läuft jedoch sehr langsam ab. Die entsprechenden Zeiten reduzieren sich auf einige Stunden, wenn der das Zwischenprodukt bildende Körper eine Dichte aufweist, die unter 100 % liegt, da sich dann der Stickstoff in Rissen und Poren dieses Körpers ungehindert ausbreiten kann und nur die Distanz zwischen benachbarten Rissen oder Poren durch Diffusion überwunden werden muß.

Außerdem ist es von Vorteil, wenn der Nitrierungsprozeß in einer reaktiven Stickstoffatmosphäre durchgeführt. Eine entsprechende Vorrichtung ist in Figur 5 als Schnitt nur schematisch angedeutet.

Bei dieser allgemein mit 10 bezeichneten Nitrierungsvorrichtung wird molekularer Stickstoff $N_2$ zunächst

in einen Reaktionsraum 11 einer Gasaktivierungseinrichtung eingeleitet, um ihn dort in reaktive Komponenten wie ionisierte Atome und Moleküle oder freie Stickstoffradikale zu überführen. Hierzu kann vorzugsweise eine Mikrowellen- oder Hochfrequenzanregung vorgesehen werden. Die entsprechende Energieeinspeisung in den Reaktionsraum 11 ist durch eine gepfeilte Linie 12 angedeutet. Der so aktivierte, mit N* bezeichnete Stickstoff wird dann einem Ofen 13 zugeführt, in dessen Innenraum 13 das Zwischenprodukt 8 angeordnet ist. Das Zwischenprodukt kann sich dabei vorteilhaft innerhalb eines seitlich offenen Quarzgefäßes 14 befinden, das die Rekombination der angeregten Stickstoffatome und -moleküle verhindert. In der Figur ist ferner das aus dem Ofen 13 wieder austretende Abgas durch eine mit A bezeichnete Linie angegeben. Die für den Nitrierungsprozeß mit aktiviertem Stickstoff konkret zu wählenden Nitrierungszeiten sind dabei von der Nitrierungstemperatur $T_3$ und insbesondere auch von der Dichte des Zwischenproduktkörpers abhängig. So liegen z.B. für 90 bis 95 % dichte Körper die Nitrierungszeiten im allgemeinen zwischen 10 Minuten und 1000 Stunden, vorzugsweise zwischen 5 Stunden und 30 Stunden. Z.B. ist eine Nitrierung eines Zwischenproduktkörpers mit einer Dichte von etwa 90 % bei 500 °C während 10 Stunden ausreichend, um in dem Endprodukt eines erfindungsgemäß hergestellten Formkörpers die gewünschte hartmagnetische $Sm_2Fe_{17}N_x$-Phase mit der gewünschten Vorzugsrichtung der Magnetisierung zu erhalten. Dieser Formkörper ist in Figur 6 mit 15 bezeichnet. Seine magnetische Vorzugsrichtung, d.h. die sogenannte leichte Richtung der Magnetisierung, ist dabei durch eine gepfeilte Linie M veranschaulicht.

Gemäß dem vorstehend erläuterten Ausführungsbeispiel wurde davon ausgegangen, daß die Nitrierung des Zwischenproduktkörpers 8 bei einer einzigen, verhältnismäßig hohen Temperatur durchgeführt wird. Es ist jedoch festzustellen, daß sich die $Th_2Zn_{17}$-Phase bei einer zu schnellen Nitration, beispielsweise bei einer Temperatur oberhalb von 500 °C, gegebenenfalls zersetzen kann. Der Grund hierfür ist darin zu sehen, daß die thermische Stabilität der Verbindung $Sm_2Fe_{17}N_x$ mit sinkendem N-Gehalt deutlich abnimmt. So liegt z. B. die Zersetzungstemperatur für x = 0,4 um etwa 100 °C niedriger als für x = 2,94. Aus diesem Grunde sind möglichst hohe x-Werte (in der Nähe von x = 3) als vorteilhaft anzusehen. Die nachfolgende Tabelle 1 zeigt die deutliche Abhängigkeit der Zersetzungstemperatur $T_d$ [in °C] von der Stickstoffkonzentration x [in Atomen pro Einheitszelle]. Bei den angegebenen Meßwerten handelt es sich um ungefähre Werte, oberhalb derer eine Zersetzung eintritt (Onset-Werte):

## Tabelle 1

| x [N-Atome pro Einheitszelle] | 0,5 | 1 | 1,5 | 2 | 2,5 |
|---|---|---|---|---|---|
| $T_d$ [°C] | 602 | 627 | 643 | 659 | 673 |

Wegen dieser Abhängigkeit der thermischen Stabilität der $Sm_2Fe_{17}N_x$-Verbindung von der Stickstoffkonzentration ist es besonders vorteilhaft, wenn der Nitrierungsprozeß des das Zwischenprodukt 8 bildenden Körpers hinsichtlich der Temperaturverhältnisse zweistufig durchgeführt wird, wobei für die erste Stufe eine insbesondere um mindestens 50 °C niedrigere Temperatur als für die zweite Stufe gewählt wird. Ein Ausführungsbeispiel einer entsprechenden zweistufigen Nitrierung eines Zwischenproduktkörpers vorbestimmter Dichte ist nachfolgend angegeben:

1. Nitrierungsstufe

Die Nitrierung erfolgt bei einer Temperatur $T_{n1}$ zwischen 300 °C und 400 °C während einer Dauer $t_{n1}$ zwischen 10 und 1000 Stunden, wobei die konkret zu wählende Zeit von der Dichte des Körpers abhängt. D. h., je dichter der Körper ist, desto längere Nitrierungszeiten sind erforderlich. Die N-Beladung zumindest im Zentrum des Körpers sollte mindestens bis zu einer Konzentration x = 1,5 erfolgen. Entsprechende Beispiele gehen aus der folgenden Tabelle 2 hervor:

## Tabelle 2

| Dichte [%] | 95 | 95 | 90 | 90 |
|---|---|---|---|---|
| $T_{n1}$ [°C] | 400 | 350 | 400 | 350 |
| $t_{n1}$ [h] | 64 | 256 | 16 | 64 |

### 2. Nitrierungsstufe

Eine weitere Beladung mit Stickstoff erfolgt bis zur maximal möglichen Konzentration von $x \leqq 3$ bei einer Temperatur $T_{n2}$, die höher liegt als die Temperatur $T_{n1}$ der ersten Nitrierungsstufe. Beispielsweise wird bei einem 90 % dichten Zwischenproduktkörper eine Temperatur $T_{n2}$ von 500 °C während einer Dauer $t_{n2}$ von 16 Stunden vorgesehen.

Bei diesem zweistufigen Nitrierungsprozeß wird in dem ersten Nitrierungsschritt vorteilhaft die thermische Stabilität des $Sm_2Fe_{17}$-Nitrids soweit erhöht, daß sich die hartmagnetische Phase bei der im zweiten Nitrierungsschritt zur vollständigen Nitrierung notwendigen höheren Temperatur $T_{n2}$ nicht zersetzen kann.

Ferner wurde bei dem erläuterten Ausführungsbeispiel davon ausgegangen, daß der Formkörper 15 direkt aus dem Zwischenprodukt 8 mit der entsprechenden Gestalt hervorgeht. Diese Gestalt wurde bei dem Verformungsvorgang in der Preßeinrichtung 6 eingestellt. Insbesondere bei kompliziert geformten Formkörpern kann eine Ausbildung der gewünschten Form in einer Presse mit Schwierigkeiten verbunden sein. Gemäß der Erfindung ist es deshalb auch möglich, das Zwischenprodukt 8 zu pulverisieren, beispielsweise zu mahlen, und anschließend zu nitrieren. Die mittlere Größe der entsprechenden Pulverpartikel sollte im allgemeinen unter 40 μm liegen. Wegen der Pulverform des Zwischenproduktes kann für die Nitrierung gegebenenfalls auf eine Aktivierung der Stickstoffatmosphäre verzichtet werden. Auch in diesem Fall ist es besonders vorteilhaft, wenn man wie bei einem kompakten Zwischenproduktkörper eine zweistufige Nitrierung wegen der Gefahr einer eventuellen Zersetzung durchführt. Die Zeiten und Temperaturverhältnisse für die einzelnen Nitrierungsstufen entsprechen zumindest weitgehend denen für Zwischenproduktkörper mit 90 % bis 95 % Dichte. Dabei hängen die konkret zu wählenden Nitrierungszeiten insbesondere von der Korngröße der zu nitrierenden Pulver ab. Aus der folgenden Tabelle 3 gehen einige Beispiele für die 1. Nitrierungsstufe hervor:

## Tabelle 3

| Korngröße [μm] | 10 | 10 | 5 | 5 |
|---|---|---|---|---|
| $T_{n1}$ [°C] | 400 | 350 | 400 | 350 |
| $t_{n1}$ [h] | 64 | 256 | 16 | 64 |

Die weitere Beladung mit Stickstoff in der 2. Nitrierungsstufe erfolgt bei einer Temperature $T_{n2}$, die höher liegt als die Temperatur $T_{n1}$ der ersten Nitrierungsstufe. Beispielsweise wird bei einer Korngröße von 10 μm eine Temperatur $T_{n2}$ von 500 °C während einer Dauer $t_{n2}$ von 16 Stunden vorgesehen.

Das so zu erhaltende hartmagnetische Pulver des Endproduktes läßt sich dann in bekannter Weise in einem magnetischen Gleichfeld ausrichten und zu dem Formkörper mit der gewünschten Gestalt kompaktieren. Die magnetische Ausrichtung des Pulvers und die Kompaktierung können sich dabei gegebenenfalls zumindest teilweise zeitlich überlappen. Daneben kann auch ohne besonderen Kompaktierungsschritt aus dem hartmagnetischen, magnetisch ausgerichteten Pulver durch Verguß mit einem Kunststoff ein kunststoffgebundener anisotroper Dauermagnet erstellt werden. Auch hier sind die magnetische Ausrichtung des Pulvers und der Kunststoffverguß nicht unbedingt zeitlich nacheinander auszuführen. Die beiden Varianten zur Herstellung eines Formkörpers aus hartmagnetischem, magnetisch ausgerichtetem Pulver sind allgemein bekannt (vgl. z.B. die genannte DE-OS 38 32 472).

**Patentansprüche**

1. Verfahren zur Herstellung eines Formkörpers aus einem anisotropen Magnetwerkstoff auf Basis des Stoffsystems Sm-Fe-N, das eine kristalline, hartmagnetische Phase mit $Th_2Zn_{17}$-Kristallstruktur aufweist, in deren Kristallgitter N-Atome eingebaut sind, bei welchem Verfahren ein Zwischenprodukt des herzustellenden Magnetwerkstoffes mit einer zweikomponentigen Sm-Fe-Phase mit einer dem Aufbau der Kristallstruktur zumindest weitgehend entsprechenden Zusammensetzung in einer stickstoffhaltigen Atmosphäre wärmebehandelt und zu dem Formkörper verarbeitet wird, **dadurch gekennzeichnet**,
   - daß zunächst ein pulverförmiges Vorprodukt (3) zu einem Preßling (5) mit magnetisch isotropem Gefüge der Sm-Fe-Phase bei erhöhter Temperatur ($T_1$) kompaktiert wird,
   - daß dann der Preßling (5) mittels eines gerichteten Heißverformungsschrittes in das Zwischenprodukt (8) mit magnetisch anisotropem Gefüge der Sm-Fe-Phase überführt wird
   und
   - daß schließlich in dem Zwischenprodukt (8) in der stickstoffhaltigen Atmosphäre mittels der Wärmebehandlung die hartmagnetische Phase des Stoffsystems Sm-Fe-H eingestellt wird.

2. Verfahren nach Anspruch 1, **dadurch gekennzeichnet**, daß das pulverförmige Vorprodukt (3) über eine Mechanische-Legierungstechnik hergestellt wird.

3. Verfahren nach Anspruch 1, **dadurch gekennzeichnet**, daß das pulverförmige Vorprodukt (3) über eine Rascherstarrungstechnik hergestellt wird.

4. Verfahren nach einem der Ansprüche 1 bis 3, **dadurch gekennzeichnet**, daß das pulverförmige Vorprodukt (3) bei einem Druck ($p_1$) zwischen 0,2 kbar und 5 kbar und einer Temperatur ($T_1$) zwischen 500 °C und 1000 °C kompaktiert wird.

5. Verfahren nach einem der Ansprüche 1 bis 4, **dadurch gekennzeichnet**, daß der Heißverformungsschritt bei einer Temperatur ($T_2$) zwischen 600 °C und 1000 °C unter Anwendung eines im wesentlichen in einer Richtung wirkenden Druckes ($p_2$) zwischen 0,2 kbar und 5 kbar durchgeführt wird.

6. Verfahren nach einem der Ansprüche 1 bis 5, **dadurch gekennzeichnet**, daß mit dem Heißverformungsschritt des Zwischenproduktes (8) im wesentlichen die Gestalt des herzustellenden Formkörpers (15) erzeugt wird.

7. Verfahren nach einem der Ansprüche 1 bis 6, **dadurch gekennzeichnet**, daß ein kompaktes Zwischenprodukt (8) mit einer Dichte zwischen 80 % und 100 %, vorzugsweise zwischen 90 % und 95 % hergestellt wird.

8. Verfahren nach einem der Ansprüche 1 bis 7, **dadurch gekennzeichnet**,
   - daß das Zwischenprodukt (8) pulverisiert wird,
   - daß dann die Wärmebehandlung des pulverisierten Zwischenproduktes (8) in der stickstoffhaltigen Atmosphäre zur Ausbildung der hartmagnetischen Phase durchgeführt wird
   und
   - daß anschließend das hartmagnetische Pulver des Zwischenproduktes in einem Magnetfeld ausgerichtet und zu dem Formkörper (15) weiterverarbeitet wird.

9. Verfahren nach Anspruch 8, **dadurch gekennzeichnet**, daß das hartmagnetische, ausgerichtete Pulver zur Ausbildung des Formkörpers (15) kompaktiert wird.

10. Verfahren nach Anspruch 8, **dadurch gekennzeichnet**, daß das hartmagnetische, ausgerichtete Pulver zur Ausbildung des Formkörpers (15) mit einem Kunststoff gebunden wird.

11. Verfahren nach einem der Ansprüche 1 bis 10, **dadurch gekennzeichnet**, daß die Ausbildung der hartmagnetischen Phase in der stickstoffhaltigen Atmosphäre bei einer Temperatur ($T_3$) zwischen 300 °C und 600 °C vorgenommen wird.

12. Verfahren nach Anspruch 11, **gekennzeichnet durch** einen zweistufigen Prozeß zur Ausbildung der hartmagnetischen Phase, wobei in der ersten Stufe eine Temperatur vorgesehen wird, die niedriger als die für die zweite Stufe zu wählende Temperatur ist.

13. Verfahren nach Anspruch 12, **dadurch gekennzeichnet**, daß für die erste Stufe eine Temperatur zwischen 300 °C und 400 °C vorgesehen wird.

14. Verfahren nach einem der Ansprüche 11 bis 13, **dadurch gekennzeichnet**, daß die Wärmebehandlung zur Ausbildung der hartmagnetischen Phase während einer Gesamtdauer zwischen 10 Minuten und 1000 Stunden, vorzugsweise zwischen 5 Stunden und 30 Stunden vorgenommen wird.

15. Verfahren nach einem der Ansprüche 1 bis 14, **dadurch gekennzeichnet**, daß die Ausbildung der hartmagnetischen Phase in einer Atmosphäre mit reaktivem Stickstoff (N*) vorgenommen wird.

## Claims

1. Method for the preparation of a moulded body from an anisotropic magnetic material based on the Sm-Fe-N substance system, which has a crystalline, magnetically hard phase with $Th_2Zn_{17}$ crystal structure, in the crystal lattice of which N-atoms are incorporated, with which method an intermediate product of the magnetic material to be prepared is heat-treated with a two-component Sm-Fe phase with a composition corresponding at least to a large extent to the assembly of the crystal structure in an atmosphere containing nitrogen and is processed into the moulded body, characterized in that
   - first of all a powdery starting product (3) is compacted into a pressed article (5) with magnetically isotropic structure of the Sm-Fe phase at increased temperature ($T_1$),
   - the pressed article (5) is then converted by means of a directed hot-forming step into the intermediate product (8) with magnetically anisotropic structure of the Sm-Fe phase
   and
   - finally in the intermediate product (8) in the atmosphere containing nitrogen, by means of the heat treatment the magnetically hard phase of the Sm-Fe-N substance system is set.

2. Method according to claim 1, characterized in that the powdery starting product (3) is prepared by way of a mechanical alloying technique.

3. Method according to claim 1, characterized in that the powdery starting product (3) is prepared by way of a rapid solidification technique.

4. Method according to one of claims 1 to 3, characterized in that the powdery starting product (3) is compacted at a pressure ($p_1$) between 0.2 kbar and 5 kbar and at a temperature ($T_1$) between 500°C and 1000°C.

5. Method according to one of claims 1 to 4, characterized in that the hot-forming step is carried out at a temperature ($T_2$) between 600°C and 1000°C with the use of a pressure ($p_2$) between 0.2 kbar and 5 kbar substantially acting in one direction.

6. Method according to one of claims 1 to 5, characterized in that the form of the moulded body (15) to be prepared is substantially produced by the hot-forming step of the intermediate product (8).

7. Method according to one of claims 1 to 6, characterized in that a compact intermediate product (8) is prepared with a density between 80% and 100%, preferably between 90% and 95%.

8. Method according to one of claims 1 to 7, characterized in that
   - the intermediate product (8) is pulverized,
   - the heat treatment of the pulverized intermediate product (8) is then carried out in the atmosphere containing nitrogen for the formation of the magnetically hard phase,
   and
   - subsequently the magnetically hard powder of the intermediate product is aligned in a magnetic field and is worked into the moulded body (15).

9. Method according to claim 8, characterized in that the magnetically hard, aligned powder is compacted for the formation of the moulded body (15).

10. Method according to claim 8, characterized in that the magnetically hard, aligned powder is bonded with a plastic material for the formation of the moulded body (15).

**11.** Method according to one of claims 1 to 10, characterized in that the formation of the magnetically hard phase in the atmosphere containing nitrogen is undertaken at a temperature ($T_3$) between 300°C and 600°C.

**12.** Method according to claim 11, characterized by a two-stage process for the formation of the magnetically hard phase, in which in the first stage a temperature is provided which is lower than the temperature to be selected for the second stage.

**13.** Method according to claim 12, characterized in that a temperature between 300°C and 400°C is provided for the first stage.

**14.** Method according to one of claims 11 to 13, characterized in that the heat treatment for the formation of the magnetically hard phase is undertaken for a total duration of between 10 minutes and 1000 hours, preferably between 5 hours and 30 hours.

**15.** Method according to one of claims 1 to 14, characterized in that the formation of the magnetically hard phase is undertaken in an atmosphere with reactive nitrogen (N*).


**Revendications**

**1.** Procédé de fabrication d'une pièce en un matériau magnétique anisotrope, à base du système de substances Sm-Fe-N, qui présente une phase magnétique dure, cristalline, à structure cristalline $Th_2Zn_{17}$, dans le réseau cristallin de laquelle sont insérés des atomes de N, procédé dans lequel un produit intermédiaire du matériau magnétique à fabriquer ayant une phase Sm-Fe à deux constituants, de composition correspondant au moins dans une grande mesure à la constitution de la structure cristalline, est traité thermiquement dans une atmosphère contenant de l'azote et est transformé en la pièce, caractérisé en ce qu'il consiste
- à compacter d'abord à température ($T_1$) haute une ébauche (3) sous forme de poudre en un comprimé (5) à texture magnétiquement isotrope de la phase Sm-Fe,
- à transformer ensuite le comprimé (5) au moyen d'un stade orienté de formage à chaud en le produit intermédiaire (8) à texture magnétiquement anisotrope de la phase Sm-Fe, et
- enfin, à établir, dans le produit intermédiaire (8) dans l'atmosphère contenant de l'azote au moyen du traitement thermique, la phase magnétique dure du système de substances Sm-Fe-N.

**2.** Procédé suivant la revendication 1, caractérisé en ce qu'il consiste à fabriquer l'ébauche (3) sous forme de poudre par une technique d'alliage mécanique.

**3.** Procédé suivant la revendication 1, caractérisé en ce qu'il consiste à fabriquer l'ébauche (3) sous forme de poudre, par une technique de solidification rapide.

**4.** Procédé suivant l'une des revendications 1 à 3, caractérisé en ce qu'il consiste à compacter l'ébauche (3) sous forme de poudre sous une pression ($p_1$) comprise entre 0,2 kbar et 5 kbar, et à une température ($T_1$) comprise entre 500°C et 1000°C.

**5.** Procédé suivant l'une des revendications 1 à 4, caractérisé en ce qu'il consiste à effectuer le stade de formage à chaud à une température ($T_2$) comprise entre 600°C et 1000°C, en utilisant une pression ($p_2$), agissant sensiblement dans une direction, comprise entre 0,2 kbar et 5 kbar.

**6.** Procédé suivant l'une des revendications 1 à 5, caractérisé en ce qu'il consiste à produire, par le stade de formage à chaud du produit intermédiaire (8), sensiblement la forme de la pièce (15) à fabriquer.

**7.** Procédé suivant l'une des revendications 1 à 6, caractérisé en ce qu'il consiste à fabriquer un produit intermédiaire (8) compact ayant une densité comprise entre 80 % et 100 % et, de préférence, entre 90 % et 95 %.

**8.** Procédé suivant l'une des revendications 1 à 7, caractérisé en ce qu'il consiste

- à réduire en poudre le produit intermédiaire (8),
- à effectuer ensuite le traitement thermique du produit intermédiaire (8) réduit en poudre dans l'atmosphère contenant de l'azote pour constituer la phase magnétique dure,
et
- à orienter ensuite la poudre magnétique dure du produit intermédiaire dans un champ magnétique et à la transformer en la pièce (15).

9. Procédé suivant la revendication 8, caractérisé en ce qu'il consiste à compacter la poudre magnétique dure et orientée pour former la pièce (15).

10. Procédé suivant la revendication 8, caractérisé en ce qu'il consiste à lier la poudre magnétique dure et orientée, par une matière plastique pour former la pièce (15).

11. Procédé suivant l'une des revendications 1 à 10, caractérisé en ce qu'il consiste à effectuer la formation de la phase magnétique dure dans l'atmosphère contenant de l'azote à une température ($T_3$) comprise entre 300°C et 600°C.

12. Procédé suivant la revendication 11, caractérisé par un processus en deux stades pour former la phase magnétique dure, en prévoyant dans le premier stade une température inférieure à celle choisie pour le second stade.

13. Procédé suivant la revendication 12, caractérisé en ce qu'il consiste à prévoir, pour le premier stade, une température comprise entre 300°C et 400°C.

14. Procédé suivant l'une des revendications 11 à 13, caractérisé en ce qu'il consiste à effectuer un traitement thermique pour former la phase magnétique dure pendant une durée totale comprise entre 10 minutes et 1000 heures, de préférence entre 5 heures et 30 heures.

15. Procédé suivant l'une des revendications 1 à 14, caractérisé en ce qu'il consiste à effectuer la formation de la phase magnétique dure dans une atmosphère ayant de l'azote (N*) réactif.

$p_1, T_1$

**FIG 1**

5

2

**FIG 2**

$p_2, T_2$

5

6

**FIG 3**

8

6

**FIG 4**

12

$N_2$

$N^*$

14    8(15)

A

11    10

13    13a

**FIG 5**

15

M

**FIG 6**

10